# FASCICULE DE BREVET EUROPEEN

(11) **EP 2 152 562 B1**
(45) Date de publication et mention de la délivrance du brevet: **10.11.2010**
(21) Numéro de dépôt: 08787980.5
(22) Date de dépôt: 22.04.2008
(51) Int. Cl.: B62D 1/26

(54) **SYSTÈME DE GUIDAGE BIDIRECTIONNEL À LIMITATION DE DÉBATTEMENT LATÉRAL, POUR UN ESSIEU ROUTIER GUIDÉ PAR UN RAIL AU SOL**
BIDIREKTIONALES FÜHRUNGSSYSTEM MIT SEITLICHER SCHWINGUNGSBEGRENZUNG FÜR EINE DURCH EINE SCHIENE IN DER ERDE GEFÜHRTE STRASSENACHSE
BIDIRECTIONAL GUIDANCE SYSTEM WITH LATERAL OSCILLATION LIMITING, FOR ROAD AXLE GUIDED BY A RAIL ON THE GROUND.

(30) Priorité: 25.05.2007 FR 0703706
(43) Date de publication de la demande: 17.02.2010
(73) Titulaire: Lohr Industrie, 67980 Hangenbieten (FR)
(72) Inventeur: ANDRE, Jean-Luc, F-67120 Molsheim (FR)
(74) Mandataire: Metz, Paul
(86) Numéro de dépôt international: PCT/FR2008/000561
(87) Numéro de publication internationale: WO 2008/152215

(56) Documents cités:
- FR-A- 2 675 105
- FR-A- 2 715 369
- FR-A- 2 778 161

## Description

La présente invention concerne un système de guidage bidirectionnel à limitation de débattement latéral, pour un essieu routier guidé par un rail au sol.

L'invention s'applique aux véhicules routiers dont le déplacement est guidé au moyen d'un rail de guidage au sol, notamment les véhicules urbains de transport de passagers.

Ce type de véhicules présente sur chacun de ses essieux routiers un dispositif de guidage portant un ou plusieurs palpeurs qui suivent le rail de guidage et orientent l'essieu par l'intermédiaire du dispositif de guidage.

On connaît ainsi par exemple des dispositifs de guidage comprenant un bras simple ou double relié à l'essieu à la manière d'un timon et s'étendant vers le rail de guidage, portant à son extrémité libre un couple de galets de guidage inclinés en V roulant chacun sur une piste opposée du rail de guidage central.

Or, ce type de véhicule circule le plus souvent sur un trajet réservé, alternativement dans les deux sens de marche sans effectuer de manoeuvre de demi-tour. Un guidage doit donc être possible dans les deux sens de marche du véhicule.

Dans ce cas, le dispositif de guidage précédemment évoqué doit être doublé pour chaque essieu par un dispositif similaire dirigé dans l'autre sens, formant ainsi un système de guidage bidirectionnel. Chacun des dispositifs de guidage du système de guidage bidirectionnel est utilisé alternativement selon le sens de circulation du véhicule.

Afin d'assurer un guidage précis et fiable du véhicule, le dispositif de guidage actif doit être solidarisé de façon rigide à l'essieu correspondant de manière à pouvoir lui transmettre les changements de direction et ainsi l'orienter correctement.

Si les deux dispositifs de guidage opposés du système de guidage bidirectionnel sont prévus rigides pour pouvoir orienter l'essieu quel que soit le sens de circulation du véhicule, on obtient un système de guidage hyperstatique sur lequel s'exercent des efforts latéraux très importants notamment dans les courbes du trajet, en cas de vent latéral ou de dérapage sur un sol glissant. Le système de guidage doit alors être dimensionné en conséquence pour pouvoir supporter de tels efforts latéraux.

Or, les pneumatiques équipant le véhicule peuvent reprendre, sans problème et sans modification, de tels efforts latéraux. En effet, dans les véhicules non guidés, ce sont les pneumatiques qui subissent principalement ces efforts. Dans les virages par exemple, ils sont soumis à des accélérations latérales conduisant à des déformations momentanées de leurs flancs.

Le document FR 2 778 161 A décrit un système de guidage bidirectionnel selon le préambule de la revendication 1.

Un objectif de l'invention est de fournir un système de guidage bidirectionnel n'ayant pas à supporter d'efforts latéraux importants, l'essentiel de ceux-ci étant repris par les pneumatiques du véhicule. Les dispositifs de guidage, ne subissant pas d'efforts importants, peuvent alors être de construction plus légère sans contraintes dimensionnelles lourdes.

Pour cela, chaque dispositif de guidage du système de guidage bidirectionnel selon l'invention présente deux états : un état directeur en configuration rigide et un état suiveur en configuration flottante qu'il adopte alternativement selon le sens de marche du véhicule.

Ainsi, selon le sens de marche du véhicule, le dispositif de guidage se trouvant à l'avant de l'essieu sert de module directeur et est placé en configuration rigide assurant un guidage précis au véhicule. Le dispositif de guidage se trouvant à l'arrière est débrayé et placé en configuration flottante. Il devient alors un module suiveur passif, qui n'a aucune influence sur le guidage et autorise un certain déport latéral de l'essieu, notamment en cas de virage ou de ripage sous efforts exceptionnels par exemple.

D'autre part, les véhicules guidés et en particulier les véhicules urbains de transport en commun doivent respecter un gabarit définissant une emprise au sol maximale prédéfinie, ce qui permet de gagner de la place dans les passages restreints et d'adapter en conséquence les voies, les quais, les stations d'arrêt, les trottoirs, le mobilier urbain ou tout autre équipement prévu à proximité.

Dans certaines circonstances, par exemple sur un sol glissant ou en présence de fort vent latéral, il arrive que les pneumatiques perdent leur adhérence et glissent latéralement au-delà du gabarit maximal autorisé.

Un autre objectif de l'invention est de fournir un système de guidage bidirectionnel qui limite le débattement latéral de l'essieu, au moyen d'une série de butées, dans une gamme autorisée compatible avec le gabarit à respecter. On autorise ainsi un certain débattement latéral, jusqu'à une déviation angulaire maximale déterminée entre l'essieu et le module suiveur assujetti à suivre le même rail au sol.

Afin d'éviter des chocs trop violents contre ces butées de limitation du débattement, le système de guidage bidirectionnel selon l'invention peut avantageusement comporter en outre un moyen d'amortissement du débattement latéral.

Pour atteindre ces objectifs l'invention enseigne un système de guidage bidirectionnel pour un essieu d'un véhicule routier guidé par un rail au sol, notamment un véhicule urbain de transport en commun.

Ce système de guidage comporte deux dispositifs de guidage solidarisés à l'essieu et disposés en sens opposé de part et d'autre de celui-ci, comprenant chacun un bras de guidage, simple ou double, s'étendant vers le rail de guidage et portant au moins un galet de guidage en prise de roulage sur le rail de guidage.

Chacun de ces dispositifs de guidage présente deux états : un état rigide permettant d'orienter l'essieu et un état flottant autorisant un débattement latéral, et sert alternativement, selon le sens de circulation du véhicule, à l'avant de module directeur à l'état rigide ou à l'arrière de module suiveur à l'état flottant.

Selon l'invention, chaque dispositif de guidage comporte :
- une interface de liaison déformable entre l'essieu et le bras de guidage, qui autorise par son caractère déformable un débattement latéral de l'essieu par rapport au rail de guidage ; et
- un vérin à deux tiges indépendantes et opposées présentant deux positions caractéristiques : une position « tiges sorties » plaçant le dispositif de guidage à l'état rigide, position dans laquelle ses deux tiges sont sorties au maximum et bloquent l'interface de liaison de manière à former une interface de liaison rigide entre l'essieu et le bras de guidage permettant d'orienter l'essieu pour assurer son guidage, et une position « tiges rentrées » plaçant le dispositif de guidage à l'état flottant, position dans laquelle ses deux tiges sont rentrées au maximum et laissent libre l'interface de liaison déformable autorisant un débattement latéral.

De préférence, le système de guidage bidirectionnel selon l'invention comporte en outre une série de butées limitant le débattement latéral.

Avantageusement, il peut comporter également un moyen d'amortissement du débattement latéral.

Selon une variante de l'invention, ce système de guidage bidirectionnel peut comporter en outre une plaque pivot, solidarisée à l'essieu de manière fixe ou par l'intermédiaire d'une articulation, et sur laquelle sont montés en sens opposé l'un de l'autre les deux dispositifs de guidage.

De préférence, l'interface de liaison déformable du système de guidage de l'invention comprend un ensemble de bielles articulées.

Il s'agit préférentiellement d'un ensemble de bielles reliées articulées à la suite l'une de l'autre et dont les extrémités libres sont fixées articulées à l'essieu ou à la plaque pivot de façon que l'ensemble de bielles forme avec celui-ci ou celle-ci un polygone, notamment un trapèze ou un parallélogramme, déformable dans un plan sensiblement horizontal.

D'autres caractéristiques et avantages de l'invention apparaîtront à la lecture de la description détaillée qui va suivre, description faite en référence aux dessins annexés, dans lesquels :
- la figure 1 est une représentation schématique d'un système de guidage bidirectionnel selon l'invention monté sur un essieu routier se trouvant dans une situation normale de roulage sur une portion droite de son trajet ;
- la figure 2 est une vue similaire à celle de la figure 1 correspondant à un déplacement du véhicule en sens inverse ;
- la figure 3 est une représentation schématique du système de guidage bidirectionnel de la figure 2, dans une situation de débattement latéral liée par exemple à une courbe du trajet ;
- la figure 4 est une représentation schématique du système de guidage bidirectionnel de la figure 2 dans sa position de débattement latéral maximal autorisé ;
- la figure 5 est une vue en perspective de la partie centrale d'un système de guidage bidirectionnel selon un mode réalisation préférentiel de l'invention ;
- la figure 6 est une vue schématique isolée d'un vérin à double tiges du système de guidage selon l'invention, en position « tiges rentrées » ;
- la figure 7 est une vue schématique isolée d'un vérin à double tiges du système de guidage selon l'invention, en position « tiges sorties » ; et
- la figure 8 est un schéma hydraulique simplifié d'un exemple de réalisation de système de guidage bidirectionnel d'un essieu routier selon l'invention.

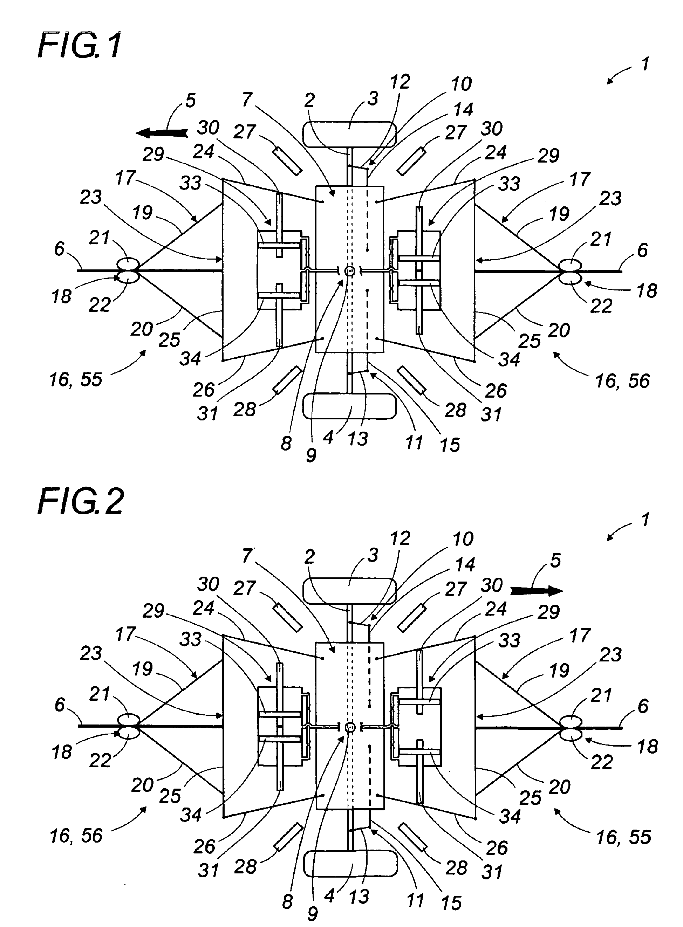

Le système de guidage bidirectionnel selon la présente invention va maintenant être décrit de façon détaillée en référence aux figures 1 à 8. Les éléments équivalents représentés sur les différentes figures porteront les mêmes références numériques. De même les deux dispositifs de guidage étant préférentiellement identiques, leurs éléments communs porteront les mêmes références.

On définira dans la suite de cette description les notions d'avant et d'arrière en fonction du sens de circulation du véhicule. Il est évident que cette orientation pourra être inversée en cas de changement de sens de circulation du véhicule.

Sur les figures 1 à 4, on a représenté schématiquement un système de guidage bidirectionnel 1 selon l'invention dans ses états caractéristiques.

Ce système de guidage 1 a pour but d'orienter un essieu 2 réunissant deux roues 3 et 4 équipées de pneumatiques, appartenant à un véhicule routier à déplacement guidé, notamment un véhicule urbain de transport en commun.

Sur l'exemple représenté, le déplacement du véhicule routier s'effectue dans le sens de la flèche 5 le long d'un rail de guidage 6 au sol.

Comme il sera expliqué par la suite et comme on peut le voir sur les figures 1 et 2, le système de guidage il selon invention est bidirectionnel et permet également le guidage du véhicule routier dans l'autre sens de circulation.

Le rail de guidage 6 représenté est préférentiellement disposé au sol en position centrale par rapport au véhicule. Cependant, l'homme du métier pourra sans difficulté adapter le système de guidage selon l'invention à un autre type de rail de guidage et notamment à un ensemble de deux rails de guidage au sol.

Dans le cas d'un essieu 2 à roues directrices, le système de guidage 1 comprend préférentiellement une plaque pivot 7 qui est montée solidaire de l'essieu routier 2 par l'intermédiaire d'une articulation 8 représentée schématiquement sous la forme d'un plot central de liaison 9.

Comme illustré, le mouvement de rotation est transmis aux roues 3 et 4 par l'intermédiaire de chaque côté d'une tringlerie de direction, respectivement 10 et 11, reliée au moyen d'articulations d'une part à l'essieu 2 à proximité de la roue 3 ou 4 correspondante et d'autre part à la plaque pivot 7, chaque tringlerie 10, 11 comprenant successivement un levier de direction 12, 13 et une bielle de direction 14, 15 reliés l'un à l'autre de façon articulée.

Dans le cas non représenté d'un essieu rigide, la plaque pivot 7 est montée fixe par rapport à l'essieu 2 ou peut même être omise.

Le système de guidage 1 selon l'invention comprend deux dispositifs de guidage 16, préférentiellement identiques, disposés en sens opposé de part et d'autre de l'essieu routier 2.

Ces dispositifs de guidage 16 sont montés sur la plaque pivot 7 et ainsi solidarisés à l'essieu 2 par l'intermédiaire de cette plaque 7, ou peuvent être directement fixés à l'essieu 2 lorsque le système ne comporte pas de plaque pivot 7.

Chacun de ces dispositifs de guidage 16 comprend un bras de guidage 17 qui s'étend vers le rail de guidage 6 et porte en extrémité au moins un galet de guidage 18 en prise de roulage sur le rail de guidage 6.

Sur la variante préférentielle représentée, il s'agit par exemple d'un bras de guidage 17 double, formé de deux branches jumelées 19 et 20 convergeant vers le rail de guidage 6 et portant à leur extrémité libre un couple de galets de guidage 18, respectivement 21 et 22, inclinés en V et roulant chacun sur une piste de roulage conformée dans un des flancs du rail de guidage 6.

Bien entendu, on peut également envisager d'autres variantes dans lesquelles le bras de guidage 17 est simple ou par exemple dans lesquelles les galets 18 sont différents en nombre ou en disposition.

Chaque dispositif de guidage 16 comporte également une interface de liaison 23 déformable entre l'essieu 2 et ie bras de guidage 17, plus particulièrement entre la plaque pivot 7 et le bras de guidage 17 sur l'exemple représenté.

Cette interface de liaison 23 est préférentiellement réalisée sous la forme d'un ensemble de bielles reliées de façon articulée à la suite l'une de l'autre et dont les extrémités libres sont fixées articulées à l'essieu 2 ou à la plaque pivot 7 de façon que l'ensemble de bielles forme avec celui-ci ou celle-ci un polygone déformable dans un plan sensiblement horizontal.

Selon le mode de réalisation préférentiel représenté, chaque dispositif de guidage 16 comporte avantageusement trois bielles reliées à la suite l'une de l'autre, respectivement une bielle d'extrémité 24, une bielle centrale ou traverse 25 et une autre bielle d'extrémité 26, les deux bielles d'extrémité 24 et 26 étant préférentiellement de même longueur et plus courtes que la bielle centrale 25.

Les extrémités libres des bielles d'extrémité 24 et 26 sont fixées de manière articulée à la plaque pivot 7 ou directement à l'essieu 2, de façon que l'ensemble de bielles forme avec le côté de la plaque pivot 7 ou avec l'essieu 2 un trapèze ou un parallélogramme déformable dans un plan sensiblement horizontal.

Le bras de guidage 17 est solidarisé à l'ensemble de bielles de préférence au niveau de la bielle centrale 25 et préférentiellement de façon symétrique lorsqu'il est formé de deux branches jumelées 19 et 20.

Un débattement latéral de l'essieu routier 2 par rapport au rail de guidage 6 est ainsi rendu possible par le caractère déformable dans un plan sensiblement horizontal de l'interface de liaison 23 entre la plaque pivot 7 et le bras de guidage 17 ou plus généralement entre l'essieu 2 et le bras de guidage 17.

L'amplitude de ce débattement est de préférence limitée par un ensemble de butées, telles que 27 et 28 par exemple, contre lesquelles l'interface de liaison 23 vient buter lorsqu'elle a atteint le débattement maximal autorisé dans un sens ou dans l'autre. Ces butées sont de préférence, comme représenté, au nombre de deux par dispositif de guidage 16, une pour chaque position limite de l'interface de liaison 23.

L'emplacement de ces butées est défini par construction en fonction des caractéristiques du trajet et de l'emprise au sol maximale autorisée pour le véhicule. Ces butées peuvent être indifféremment placées à l'intérieur ou à l'extérieur de l'ensemble de bielles et peuvent par exemple être portées par la plaque pivot 7 ou par tout autre élément approprié du véhicule.

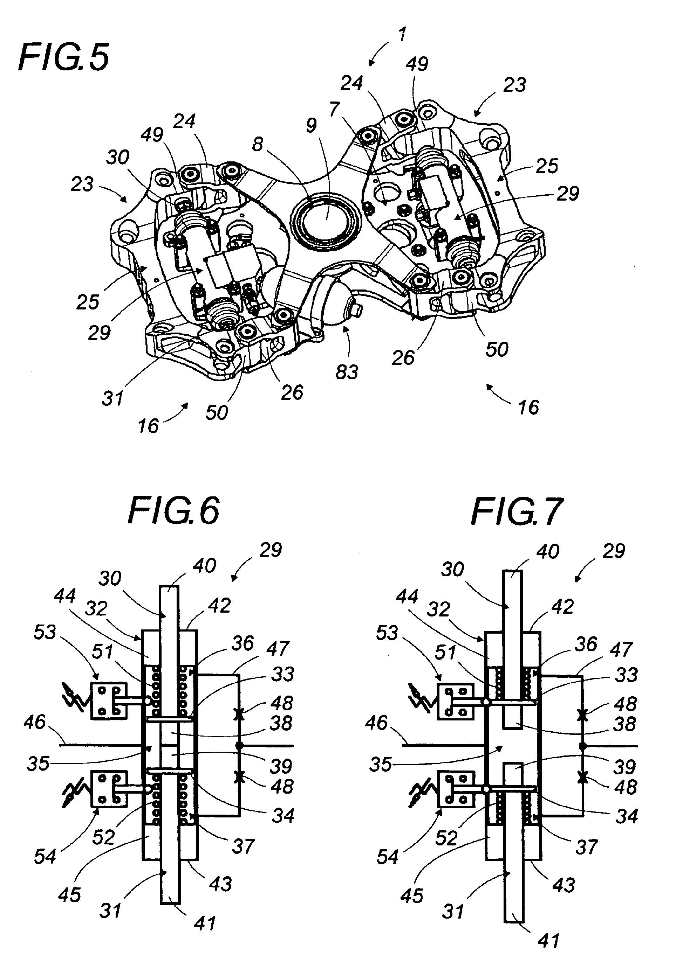

En outre, chaque dispositif de guidage 16 comporte un vérin 29, de préférence hydraulique, à deux tiges 30 et 31 indépendantes et opposées. Ce vérin a été représenté isolé et plus en détail sur les figures 6 et 7 dans ses deux positions caractéristiques, à savoir en position « tiges rentrées » pour la figure 6 et en position « tiges sorties » pour la figure 7.

Le vérin 29 comprend un corps 32, préférentiellement cylindrique, dans lequel se déplacent deux pistons 33 et 34 solidaires chacun de l'une des tiges respectivement 30 et 31.

Le volume intérieur du corps 32 du vérin est ainsi divisé en une chambre centrale 35 et deux chambres annulaires d'extrémité 36 et 37, respectivement situées entre et de part et d'autre des deux pistons 33, 34.

Selon un mode de réalisation préférentiel, chacun des pistons 33 et 34 est monté sur l'une des tiges 30 et 31 et se déplace solidairement à celle-ci. Chaque piston 33 ou 34 est positionné sur la tige correspondante 30 ou 31 de manière qu'une partie de celle-ci dépasse de chaque côté du piston, définissant ainsi pour chaque tige une partie intérieure, respectivement 38 et 39, située dans la chambre centrale 35 du vérin et une partie extérieure, respectivement 40 et 41, s'étendant dans la chambre annulaire d'extrémité correspondante 36 ou 37 et au-delà de celle-ci. Bien entendu, d'autres modes de réalisation équivalents sont envisageables.

La partie extérieure 40, 41 des tiges 30 et 31 présente une longueur plus importante que la partie intérieure 38, 39 de celle-ci et s'étend hors du corps 32 du vérin en passant de chaque côté à travers la paroi d'extrémité correspondante 42, 43 du corps 32.

L'étanchéité du corps 32 du vérin est garantie à ce niveau par la présence d'un moyen d'étanchéité, tel que 44 et 45, placé par exemple sur la face intérieure des parois d'extrémité 42 et 43 et assurant un coulissement étanche de la partie extérieure 40, 41 des tiges 30 et 31.

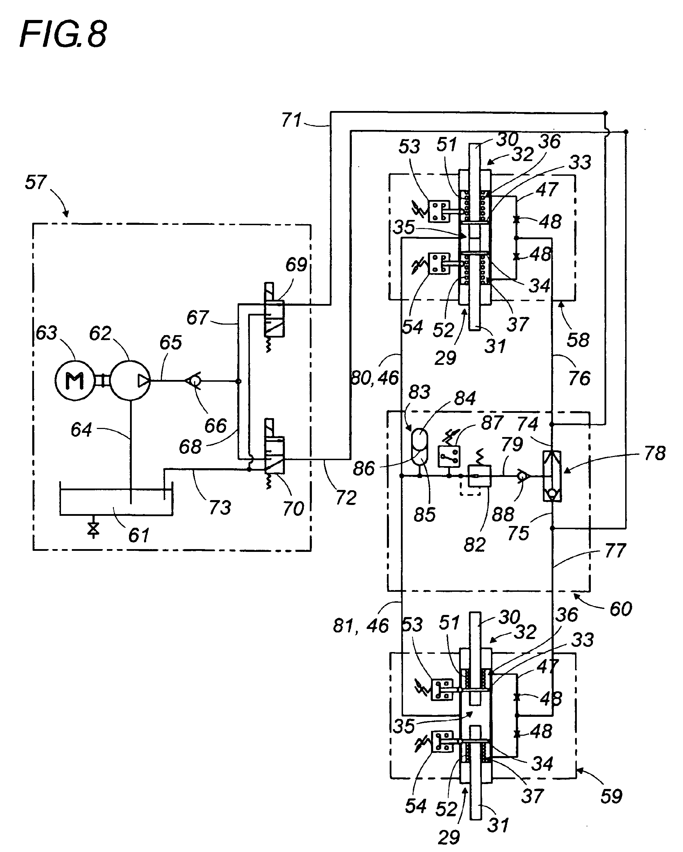

La chambre centrale 35 du vérin est alimentée en fluide par un conduit d'alimentation 46 selon un circuit dont on décrira un exemple par la suite en référence à la figure 8.

Selon un mode de réalisation préférentiel de l'invention, les deux chambres annulaires d'extrémité 36 et 37 du vérin 29 se trouvent en communication fluidique via un conduit de communication 47 qui les relie l'une à l'autre. De préférence, ce conduit de communication 47 comporte un ou plusieurs étranglements 48 dont la fonction sera explicitée par la suite.

Lorsque la pression dans la chambre centrale 35 est supérieure à celle des chambres annulaires d'extrémité 36 et 37, les pistons 33 et 34 s'écartent l'un de l'autre et se déplacent vers les parois d'extrémité 42 et 43 du corps 32, provoquant la sortie de la partie extérieure 40, 41 des tiges 30 et 31 du vérin jusqu'à une position maximale appelée position « tiges sorties » dans laquelle se trouve le vérin 29 représenté sur la figure 7 et le vérin avant des figures 1 à 4.

Dans cette position, l'extrémité libre de la partie extérieure 40, 41 des tiges 30 et 31 vient, de façon directe ou indirecte, bloquer l'interface de liaison 23 de manière à former une interface de liaison rigide entre la plaque pivot 7 ou l'essieu 2 et le bras de guidage 17.

Pour provoquer ce blocage, l'extrémité libre de la partie extérieure 40, 41 des tiges 30 et 31 peut venir directement pousser sur une ou plusieurs bielles de l'interface de liaison 23, par exemple sur les deux bielles d'extrémité 24 et 26 comme sur la variante schématisée sur les figures 1 à 4 ou sur un retour d'extrémité, respectivement 49 et 50, de la bielle centrale 25 comme sur le mode de réalisation de la figure 5.

Ce blocage peut également être obtenu indirectement au moyen d'un dispositif intermédiaire quelconque imaginé par l'homme du métier, de nature mécanique, hydraulique, électrique, électronique ou autre, commandant le blocage de l'interface de liaison 23 lorsque le vérin 29 se trouve en position « tiges sorties ».

Avantageusement, lorsque les pistons 33 et 34 se déplacent en écartement l'un de l'autre en direction des parois d'extrémité 42, 43, ils compriment préférentiellement chacun un ressort, respectivement 51 et 52, disposé entre le piston concerné et la paroi d'extrémité 42 ou 43 correspondante, ou bien comme représenté entre le piston concerné et le moyen d'étanchéité 44, 45 recouvrant le fond de la chambre annulaire d'extrémité 36, 37 correspondante.

Ces ressorts 51 et 52 ont pour fonction de rappeler élastiquement les pistons 33 et 34 sensiblement vers le centre à l'intérieur du corps 32 du vérin. Selon une autre variante non représentée, ces ressorts pourraient également être placés à l'extérieur du corps 32 du vérin 29 et directement agir sur les tiges 30 et 31.

Selon un mode de réalisation préférentiel de l'invention, les dispositifs de guidage 16 sont équipés également d'un ou plusieurs capteurs, tels que 53 et 54, qui détectent lorsque le vérin 29 se trouve en position « tiges sorties ». Il est évidemment possible d'ajouter un ou plusieurs capteurs supplémentaires détectant d'autres positions du vérin et notamment sa position « tiges rentrées ».

Lorsque la pression de la chambre centrale 35 est inférieure à celle des chambres annulaires d'extrémité 36 et 37, les pistons 33 et 34 se rapprochent l'un de l'autre, décomprimant progressivement les ressorts de rappel 51 et 52. La zone de la partie extérieure 40, 41 des tiges 30, 31 dépassant au-delà des parois d'extrémité 42 et 43 du corps 32 diminue progressivement, jusqu'au contact de l'extrémité libre des parties intérieures 38, 39 des tiges 30 et 31 définissant ainsi la taille minimale de la chambre centrale 35. Le vérin 29 se trouve alors dans une configuration appelée position « tiges rentrées » dans laquelle se trouve le vérin 29 représenté sur la figure 6 et le vérin amère des figures 1 à 4. Cependant, même dans cette position, une partie des tiges 30 et 31 continue à dépasser en dehors du corps 32 du vérin 29.

Dans cette position, l'interface de liaison 23 est libre et le dispositif de guidage 16 correspondant est flottant autorisant ainsi le débattement latéral de l'essieu routier 2 par rapport au rail de guidage 6.

Les dispositifs de guidage 16 présentent donc deux états qu'ils peuvent occuper alternativement :
- un état rigide correspondant à la position « tiges sorties » du vérin 29 dans laquelle l'interface de liaison 23 est bloquée et forme une interface de liaison rigide entre la plaque pivot 7 ou l'essieu 2 et le bras de guidage 17 permettant d'orienter l'essieu et ainsi d'assurer un guidage satisfaisant de celui-ci ; et
- un état flottant correspondant à la position « tiges rentrées » du vérin 29 dans laquelle l'interface de liaison 23 est déformable dans un plan sensiblement horizontal, autorisant ainsi un débattement latéral de l'essieu.

Selon le sens de circulation du véhicule, symbolisé par la flèche 5 sur les figures 1 à 4, le dispositif de guidage 16 se trouvant à l'avant sert de module directeur 55 et le dispositif de guidage 16 placé à l'arrière sert de module suiveur 56.

Pour cela, le module directeur 55 est placé à l'état rigide par le passage de son vérin 29 en position « tiges sorties » et le module suiveur 56 est mis à l'état flottant par le passage de son vérin 29 en position « tiges rentrées ». Bien entendu, cette configuration est inversée en cas de changement du sens de circulation du véhicule.

Le passage des deux modules dans leur configuration appropriée par rapport au sens d'avancement du véhicule peut être commandé manuellement par exemple par le conducteur du véhicule, ou automatiquement, par exemple lors de la mise route du poste de pilotage spécifique à un sens d'avancement.

Le contrôle de l'état rigide du module directeur 55, indispensable pour assurer un guidage correct du véhicule, peut avantageusement être réalisé par les capteurs 53 et 54 de ce module qui détectent la position « tiges sorties » du vérin 29.

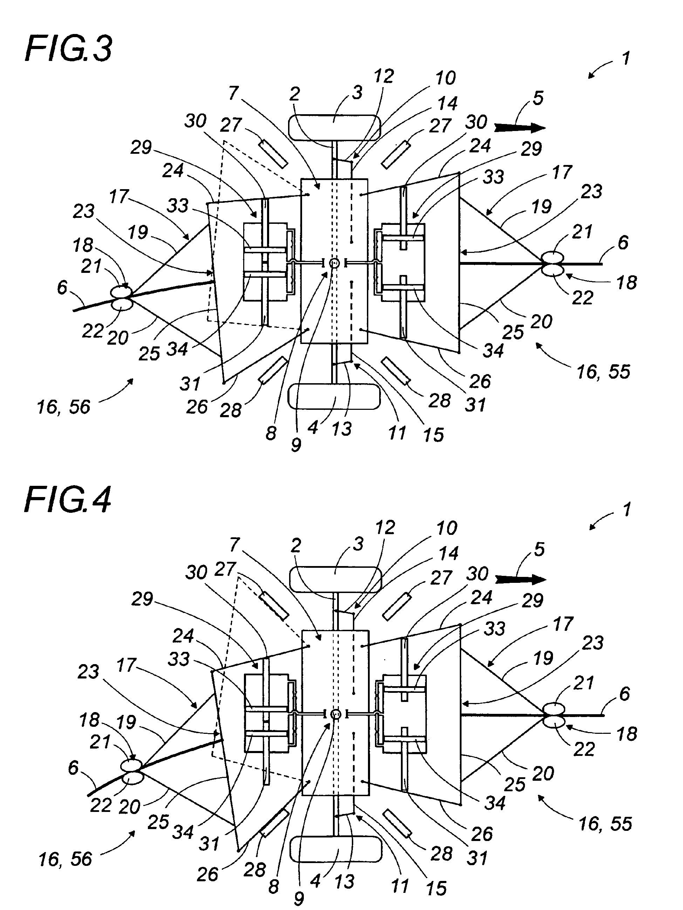

Comme précédemment mentionné, le module suiveur 56 qui est à l'état flottant, autorise un certain débattement latéral. Les figures 3 et 4 sont une illustration de cette possibilité de débattement par exemple au niveau d'une portion courbe du rail de guidage 6.

L'amplitude maximale de ce débattement est fixée par la position des butées 27 et 28. L'une des positions limite, correspondant au débattement maximal possible de chaque côté, a été représentée sur la figure 4. Dans la position représentée, l'interface de liaison 23 déformable formée par les bielles arrive en butée contre la butée 28 qui s'oppose à tout débattement supplémentaire.

Le débattement peut évidemment se produire de façon symétrique vers l'autre côté. Dans ce cas, l'interface de liaison déformable 23 vient en butée contre la butée 27 comme représenté en pointillés sur la figure 4.

Selon un mode de réalisation préférentiel de l'invention, le système de guidage comporte un moyen d'amortissement du débattement latéral afin d'éviter par exemple les chocs violents entre l'interface de liaison 23 et les butées 27 et 28. Cet amortissement du débattement est une fonction supplémentaire du vérin 29 du dispositif de guidage 16.

Pour faciliter la compréhension du lecteur, un exemple d'un tel amortissement du débattement latéral a été représenté sur la suite de figures 2 à 4. Dans cet exemple et dans la partie de la description s'y référant, le débattement se produit en direction de la butée 28. Bien entendu, il peut s'effectuer de la même façon dans l'autre sens en direction de la butée 27. Dans ce cas, le système fonctionne de manière identique avec les éléments symétriques du dispositif.

Pour que le débattement latéral soit possible, le vérin 29 du dispositif de guidage 16 se trouvant à l'arrière (module suiveur 56) est placé en position « tiges rentrées ». En l'absence de débattement, ce dispositif de guidage 16 est dans la configuration illustrée sur la figure 2.

Lorsqu'un débattement latéral se produit, l'interface de liaison 23 se déforme et se déplace en direction de l'un des côtés du véhicule vers l'une des butées 27, 28, par exemple vers la butée 28 sur l'exemple représenté.

Au cours de ce déplacement et avant d'arriver en butée contre la butée 28, l'interface de liaison 23, plus particulièrement ici la bielle d'extrémité 24, entre en contact avec l'extrémité de la partie extérieure 40 de la tige 30 dépassant hors du corps 32 du vérin 29. Le dispositif se trouve alors dans la configuration représentée sur la figure 3.

Lorsque le débattement se poursuit, l'interface de liaison 23 continue à se déplacer vers la butée 28. Par ce mouvement, elle entraîne avec elle la tige 30 du vérin 29.

Les parties intérieures 38 et 39 des tiges 30 et 31 étant en contact dans la position « tiges rentrées » du vérin 29, les tiges 30 et 31, ainsi que les pistons 33 et 34, se déplacent ensemble de façon solidaire lorsqu'un effort est exercé sur la partie saillante de l'une des tiges 30 ou 31. Un tel déplacement des pistons 33, 34 provoque l'agrandissement de l'une des chambres annulaires d'extrémité 36 ou 37 du vérin 29 au détriment de l'autre, ce qui est rendu possible par la communication fluidique existant entre les deux chambres d'extrémité 36 et 37 au moyen du conduit de communication 47.

Lorsque la bielle d'extrémité 24 entraîne la tige 30 du vérin 29, la chambre annulaire d'extrémité 36 du vérin 29 s'agrandit alors que la chambre annulaire d'extrémité 37 diminue. Pour cela, une partie du fluide initialement présent dans la chambre d'extrémité 37 passe dans la chambre d'extrémité 36 par le conduit de communication 47. Le fluide est ainsi obligé de passer par les étranglements 48 du conduit 47 qui provoquent sur celui-ci un effet de laminage et diminuent son débit. Le mouvement d'ensemble des tiges 30 et 31 s'en trouve ralenti, provoquant en conséquence un amortissement du déplacement de l'interface de liaison 23 et plus généralement du débattement latéral.

Il est à noter que lors de ces déplacements, en position « tiges rentrées » du vérin 29, il n'y a pas de variation du volume de la chambre centrale 35, les tiges 30 et 31 étant en contact, ni du volume total des chambres annulaires d'extrémité 36 et 37 par transfert d'huile d'une chambre vers l'autre.

Il n'y a donc pas de variation de pression vers l'extérieur de ces chambres lors du mouvement d'amortissement. Evidemment, la pression monte dans la chambre annulaire d'extrémité 37 du fait du freinage du transfert d'huile réalisé par les étranglements 48, ce qui est précisément le fonctionnement de l'amortissement recherché.

Le mouvement de l'interface de liaison 23 se poursuit ainsi de façon amortie, jusqu'à la position limite représentée sur la figure 4 correspondant au débattement latéral maximal autorisé et dans laquelle la bielle d'extrémité 26 arrive en contact de butée contre la butée 28. Grâce à l'amortissement réalisé par le vérin 29, ce contact de butée se fait sans choc violent susceptible d'endommager le dispositif.

Au cours du déplacement des pistons 33 et 34 sous l'effet de l'effort exercé par la bielle d'extrémité 24 sur la tige 30, le ressort 52 est progressivement comprimé.

Lorsque le débattement latéral prend fin, l'interface de liaison 23 reprend sa position initiale. Simultanément, le ressort 52 se détend et contraint par rappel élastique le piston 34 à sensiblement retrouver sa place initiale. Par voie de conséquence, il en est de même pour les tiges 30 et 31 et le piston 33 qui se déplacent solidairement. Le vérin 29 reprend alors sa configuration initiale représentée sur la figure 2.

évidemment, cette position est approximative. En effet, deux ressorts en opposition ne peuvent donner une position précise en raison notamment des frottements à vaincre qui s'opposent de façon déséquilibrée à l'action des deux ressorts ou aux différences qui peuvent exister entre les deux ressorts. Une telle situation n'est toutefois pas gênante car seul un rappel approximativement vers le centre est recherché.

Selon une caractéristique préférentielle de l'invention, on remarquera que quelle que soit la position du vérin et même lorsque les tiges 30 et 31 du vérin 29 se trouvent dans leur position limite dans un sens comme dans l'autre, le conduit d'alimentation 46 reste libre et capable d'alimenter la chambre centrale 35 du vérin 29, de façon à pouvoir à tout moment faire passer le vérin en position sécuritaire « tiges sorties ».

Un exemple de circuit hydraulique simplifié compatible avec le système de guidage bidirectionnel selon l'invention va maintenant être décrit en référence à la figure 8.

Ce circuit se compose de quatre groupes fonctionnels principaux : un groupe hydraulique 57, deux blocs vérin 58 et 59 et un ressort hydraulique 60.

Le groupe hydraulique 57 permet d'alimenter les différents éléments du circuit en liquide hydraulique, à savoir préférentiellement de l'huile.

Pour cela le groupe hydraulique 57 comprend un réservoir tampon 61, également appelé bâche, contenant de l'huile et placé à la pression atmosphérique.

Il comprend également une pompe 62 actionnée par un moteur 63, qui aspire l'huile dans le réservoir tampon 61 au moyen du conduit 64 et l'envoie sous pression dans le reste du circuit par le conduit d'alimentation 65. De façon classique, la pompe 62 est protégée par un clapet anti-retour 66.

Le conduit d'alimentation 65 se sépare en deux branches 67 et 68 conduisant chacune à l'un des blocs vérin 58 ou 59. Sur chacune de ces branches 67, 68 est placé un distributeur à deux positions, respectivement 69 et 70, permettant selon sa position, soit de mettre la branche concernée en communication avec un conduit de liaison 71 ou 72 avec le bloc vérin 58, 59 correspondant, soit de la stopper. Dans ce dernier cas, le distributeur 69, 70 place le conduit de liaison 71 ou 72 correspondant en communication avec un conduit 73 de retour au réservoir tampon 61. Ainsi, selon la position du distributeur 69, 70 correspondant, chaque conduit de liaison 71 ou 72 communiquant avec l'un des blocs vérin 58, 59 est soit mis en pression, soit mis à la bâche.

Les blocs vérin 58 et 59 comprennent chacun un vérin 29 à deux tiges 30 et 31 indépendantes et opposées, comme précédemment décrit.

Chaque conduit de liaison 71, 72 se divise en un conduit, respectivement 74 et 75, allant vers le ressort hydraulique 60 et un conduit, respectivement 76 et 77, allant vers le bloc vérin 58, 59 correspondant et relié au vérin 29 au niveau de son conduit de communication 47 de manière à alimenter ses chambres annulaires d'extrémité 36 et 37.

Les conduits 74 et 75 aboutissent au ressort hydraulique 60 via un ensemble de clapets anti-retour 78 et se prolongent par un conduit 79 unique traversant le bloc fonctionnel du ressort hydraulique 60 pour de nouveau se séparer en sortie en deux conduits 80 et 81 allant chacun vers un bloc vérin 58, 59 et servant de conduit d'alimentation 46 de la chambre centrale 35 du vérin 29.

Le ressort hydraulique 60 comporte successivement le long du conduit 79 un réducteur de pression 82 et un accumulateur 83 dont le volume intérieur est divisé en deux chambres 84 et 85 par une membrane 86. La première 84 des chambres de l'accumulateur 83 est fermée de manière étanche et contient un gaz sous pression, préférentiellement de l'azote. La seconde 85 est en communication avec le circuit hydraulique et sert de réserve de liquide hydraulique.

De préférence, un capteur de pression 87 peut être prévu à proximité de l'accumulateur 83 de façon à surveiller la pression dans le circuit de l'accumulateur.

Le fonctionnement de ce circuit hydraulique découle de façon évidente de la description ci-dessus.

Lorsque le véhicule circule, le vérin 29 situé à l'avant, correspondant au bloc vérin 59 sur la figure 8, doit être placé en position « tiges sorties » alors que celui situé à l'arrière, correspondant au bloc vérin 58, doit être en position « tiges rentrées ».

Pour cela, le distributeur 69 est placé dans sa position reliant la branche 67 au conduit de liaison 71. La pompe 62 envoie ainsi de l'huile sous pression dans les chambres annulaires d'extrémité 36 et 37 du bloc vérin 58, via les conduits 65, 67, 71, 76 et 47.

De l'huile sous pression provenant du conduit 71 est également envoyée par le conduit 74 vers le ressort hydraulique 60 via l'ensemble de clapets anti-retour 78. Elle vient gaver la chambre 85 de l'accumulateur 83 après avoir subi une diminution de sa pression en passant par le réducteur de pression 82.

La chambre centrale 35 du bloc vérin 58 se trouvant en liaison fluidique avec la chambre 85 de l'accumulateur 83 est donc soumise à une pression inférieure à celle des chambres annulaires d'extrémité 36 et 37 directement reliées à la pompe 62. Les pistons 33 et 34 sont donc contraints en rapprochement jusqu'au contact des tiges 30 et 31, plaçant ainsi le vérin 29 du bloc vérin 58 en position « tiges rentrées ».

La diminution de pression réalisée par le réducteur de pression, 82 doit être assez importante pour que le fluide contenu dans les chambres annulaires d'extrémité 36 et 37 fasse rentrer les tiges 30 et 31. En effet, il existe classiquement une différence de section soumise à la pression. Du côté de la chambre centrale 35 la pression s'exerce sur toute la surface des pistons 33 et 34, alors que du côté des chambres annulaires elle ne s'exerce que sur des surfaces annulaires correspondant à la surface du piston concerné moins la section de la tige correspondante.

Par ailleurs, le distributeur 70 est placé dans sa position interrompant la branche 68 et mettant le conduit de liaison 72 en communication avec le conduit 73 de retour au réservoir tampon 61.

Les chambres d'extrémité 36 et 37 du vérin 29 du bloc vérin 59 communiquent avec le réservoir tampon 61 via les conduits 73, 72, 77 et 47 et sont ainsi placées à la pression atmosphérique.

La chambre centrale 35 du vérin 29 est en liaison avec la chambre 85 de l'accumulateur 83 via les conduits 81 et 79, et se trouve ainsi à une pression supérieure à la pression atmosphérique. Les pistons 33 et 34 sont donc contraints en écartement, comprimant les ressorts 51 et 52 et plaçant le vérin 29 du bloc vérin 59 en position « tiges sorties ».

Avantageusement, le rôle du ressort hydraulique 60 est de contraindre par défaut les vérins 29 en position « tiges sorties ». Cette position est en effet la position la plus sûre pour le véhicule car elle assure un guidage stable permanent de ce dernier pouvant fonctionner même s'il use les galets de guidage qui doivent reprendre tous les efforts. Ce n'est pas le cas lorsque les deux vérins sont en position « tiges rentrées ».

Avantageusement avec le système de guidage selon l'invention, cette position de sécurité est obtenue de façon passive et c'est le passage en position « tiges rentrées » qui nécessite l'entrée en action de la pompe 62.

De la même façon, il faut alimenter en électricité les distributeurs 69 et 70 pour qu'ils alimentent les chambres annulaires d'extrémité 36, 37 des vérins 29 et provoquent le passage en position « tiges rentrées ». Ainsi en cas de coupure électrique, les tiges des vérins 29 sortent automatiquement.

En cas d'arrêt ou de dysfonctionnement de la pompe 62 ou plus généralement du groupe hydraulique 57, ou en cas de fuite au niveau des conduits situés entre le groupe hydraulique 57 et les blocs vérin 58 et 59, l'accumulateur 83 assure avantageusement un passage automatique en position sécuritaire « tiges sorties » des vérins 29.

Pour des raisons de sécurité, un clapet anti-retour 88 supplémentaire est préférentiellement prévu pour empêcher ia vidange de la chambre 85 de l'accumulateur 83 en cas de rupture de l'un des conduits situés entre le groupe hydraulique 57 et les blocs vérin 58 et 59 ou le ressort hydraulique 60.

De préférence et par précaution constructive, les conduits situés entre l'accumulateur 83 et les blocs vérins 58 et 59 sont réalisés sous la forme de tuyaux rigides les plus courts possible de manière à limiter les risques de fuites. Le bloc 60 du ressort hydraulique peut même être directement flasqué sur l'un des deux vérins 29 de façon à minimiser les tuyauteries.

Sur la figure 8, on a représenté un circuit hydraulique simplifié ne comprenant que deux blocs vérin 58 et 59 montés sur un essieu 2. Bien évidemment ce circuit peut être plus complexe et comporter par exemple plusieurs autres blocs vérin affectés par groupe de deux au guidage d'essieux supplémentaires. Ces groupes de deux blocs vérin supplémentaires coopèrent préférentiellement chacun avec un ressort hydraulique supplémentaire. De préférence, ils peuvent être alimentés en parallèle par le même groupe hydraulique 57. Leur fonctionnement est identique à celui précédemment décrit.

Le système de guidage bidirectionnel selon l'invention présente avantageusement un limiteur d'efforts intrinsèque lié au mode de fonctionnement hydraulique décrit ci-dessus. En effet, en cas de pics d'effort s'exerçant sur le système de guidage en position « tiges sorties », par exemple en cas de gros défauts de voie, les tiges rentrent partiellement si l'effort subit par celles-ci est supérieur à la pression de l'accumulateur, protégeant ainsi les pièces mécaniques du dispositif. On peut avantageusement choisir et fixer la pression de l'accumulateur en fonction de l'effort maximal acceptable par le dispositif.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention.

Ainsi par exemple, le système de guidage selon l'invention pourrait être appliqué à un véhicule circulant toujours dans le même sens afin de contrôler et préférentiellement d'amortir son débattement latéral. Dans ce cas, le dispositif de guidage placé à l'avant de l'essieu peut être modifié pour être toujours à l'état rigide ou être remplacé par un dispositif de guidage rigide par construction.

## Revendications

1. Système de guidage bidirectionnel (1) comportant un essieu (2) pour un véhicule routier guidé par un rail (6) au sol, notamment un véhicule urbain de transport en commun, système de guidage comportant en outre deux dispositifs de guidage (16), solidarisés à l'essieu (2) et disposés en sens opposé de part et d'autre de celui-ci, comprenant chacun un bras de guidage (17), simple ou double, s'étendant vers le rail de guidage (6) et portant au moins un galet de guidage (18) en prise de roulage sur le rail de guidage (6), chacun de ces dispositifs de guidage (16) présentant deux états, un état rigide permettant d'orienter l'essieu (2) et un état flottant autorisant un débattement latéral, et servant alternativement, selon le sens de circulation du véhicule, à l'avant de module directeur (55) à l'état rigide ou à l'arrière de module suiveur (56) à l'état flottant, **caractérisé en ce que** chaque dispositif de guidage (16) comporte :
. une interface de liaison (23) déformable entre l'essieu (2) et le bras de guidage (17), qui autorise par son caractère déformable un débattement latéral de l'essieu (2) par rapport au rail de guidage (6) ; et
. un vérin (29) à deux tiges (30, 31) indépendantes et opposées présentant deux positions caractéristiques : une position « tiges sorties » plaçant le dispositif de guidage (16) à l'état rigide, position dans laquelle ses deux tiges (30, 31) sont sorties au maximum et bloquent l'interface de liaison (23) de manière à former une interface de liaison rigide entre l'essieu (2) et le bras de guidage (17) permettant d'orienter l'essieu (2) pour assurer son guidage, et une position « tiges rentrées » plaçant le dispositif de guidage (16) à l'état flottant, position dans laquelle ses deux tiges (30, 31) sont rentrées au maximum et laissent libre l'interface de liaison déformable (23) autorisant un débattement latéral.

2. Système de guidage bidirectionnel selon la revendication 1 **caractérisé en ce qu'**il comporte en outre une plaque pivot (7), solidarisée à l'essieu (2) de manière fixe ou par l'intermédiaire d'une articulation (8), et sur laquelle sont montés en sens opposé l'un de l'autre les deux dispositifs de guidage (16).

3. Système de guidage bidirectionnel selon la revendication 1 ou 2 **caractérisé en ce que** l'interface de liaison (23) déformable comprend un ensemble de bielles articulées.

4. Système de guidage bidirectionnel selon la revendication précédente **caractérisé en ce que** l'interface de liaison (23) déformable est un ensemble de bielles reliées articulées à la suite l'une de l'autre et dont les extrémités libres sont fixées articulées à l'essieu (2) ou à la plaque pivot (7) de façon que l'ensemble de bielles forme avec celui-ci ou celle-ci un polygone, un trapèze ou un parallélogramme, déformable dans un plan sensiblement horizontal.

5. Système de guidage bidirectionnel selon l'une quelconque des revendications précédentes **caractérisé en ce qu'**il comporte en outre une série de butées (27, 28) limitant le débattement latéral.

6. Système de guidage bidirectionnel selon l'une quelconque des revendications précédentes **caractérisé en ce qu'**il comporte en outre un moyen d'amortissement (48) du débattement latéral.

7. Système de guidage bidirectionnel selon la revendication précédente **caractérisé en ce que**, en cas de débattement latéral, l'interface de liaison déformable (23) est susceptible d'entraîner par son mouvement de déformation l'une des tiges (30, 31) du vérin (29) provoquant alors un amortissement du débattement latéral.

8. Système de guidage bidirectionnel selon l'une quelconque des revendications précédentes **caractérisé en ce que** le vérin (29) comprend un corps (32) cylindrique dans lequel se déplacent deux pistons (33, 34) solidaires chacun de l'une des tiges (30, 31) du vérin (29) et divisant le volume intérieur du corps (32) en une chambre centrale (35) et deux chambres annulaires d'extrémité (36, 37), respectivement situées entre et de part et d'autre des deux pistons (33, 34) ; et **en ce que** les pistons (33, 34) sont montés sur la tige (30, 31) correspondante du vérin (29) de manière qu'une partie de celle-ci dépasse de chaque côté du piston, définissant ainsi pour chaque tige une partie intérieure (38, 39) située dans la chambre centrale (35) du vérin et une partie extérieure (40, 41) s'étendant dans la chambre annulaire d'extrémité (36, 37) correspondante et au-delà de celle-ci, les extrémités libres des parties intérieures (38, 39) des deux tiges (30, 31) du vérin étant en contact lorsque le vérin est en position « tiges rentrées ».

9. Système de guidage bidirectionnel selon la revendication 8 **caractérisé en ce que** la chambre centrale (35) du vérin (29) est alimentée en fluide par un conduit d'alimentation (46) restant libre et capable d'alimenter la chambre centrale quelle que soit la position du vérin ; et **en ce qu'**il comporte un conduit de communication (47) reliant les deux chambres annulaires d'extrémité (36, 37) du vérin (29).

10. Système de guidage bidirectionnel selon la revendication précédente **caractérisé en ce que** le conduit de communication (47) reliant les deux chambres annulaires d'extrémité (36, 37) comporte au moins un étranglement (48).

11. Système de guidage bidirectionnel selon l'une quelconque des revendications 8 à 10 **caractérisé en ce qu'**il comporte des ressorts (51, 52) rappelant élastiquement les pistons (33, 34) vers le centre à l'intérieur du corps (32) du vérin (29).

12. Système de guidage bidirectionnel selon l'une quelconque des revendications précédentes **caractérisé en ce que** chaque dispositif de guidage (16) comporte au moins un capteur (53, 54) détectant la position « tiges sorties » du vérin (29).

13. Système de guidage bidirectionnel selon l'une quelconque des revendications précédentes **caractérisé en ce qu'**il est hydraulique et **en ce que** son circuit hydraulique comporte un groupe hydraulique (57) permettant d'alimenter les différents éléments du circuit en liquide hydraulique, au moins deux blocs vérin (58, 59) et au moins un ressort hydraulique (60) servant à contraindre les vérins (29) en position « tiges sorties ».

14. Système de guidage bidirectionnel selon la revendication précédente **caractérisé en ce que** le groupe hydraulique (57) comprend un réservoir tampon (61), une pompe (62) actionnée par un moteur (63) et deux distributeurs à deux positions (69, 70).

15. Système de guidage bidirectionnel selon la revendication 13 **caractérisé en ce que** le ressort hydraulique (60) comporte un réducteur de pression (82) et un accumulateur (83) dont le volume intérieur est divisé en deux chambres (84, 85) par une membrane (86), l'une (84) étant fermée de manière étanche et contenant un gaz sous pression et la seconde (85) étant en communication avec le circuit hydraulique et servant de réserve de liquide hydraulique.

## Claims

1. A bidirectional guide system (1) for an axle (2) on a road vehicle guided by a ground rail (6), especially a public urban transport vehicle, said guide system comprising two guide devices (16) attached to the axle (2) and arranged in opposite directions on either side of the axle, each comprising a guide arm (17), either single or double, extending toward the guide rail (6) and holding at least one guide roller (18) engaged in travel along the guide rail (6), each of said guide devices (16) existing in two states, a rigid state for orienting the axle (2) and a floating state allowing lateral displacement, and serving alternately depending upon the vehicle's direction of travel, at the front as a director module (55) in the rigid state, or at the rear as a follower module (56) in the floating state, **characterized in that** each guide device (16) comprises :
• a deformable connecting interface (23) between the axle (2) and the guide arm (17) which because of its deformable nature allows lateral displacement of the axle (2) relative to the guide rail; and
• a cylinder (29) with two independent, opposing shafts (30, 31) that assume two characteristic positions: an "extended shafts" position placing the guide device (16) into the rigid state, in which position its two shafts (30, 31) are extended to the maximum and block the connecting interface (23) so as to form a rigid connecting interface between the axle (2) and the guide arm (17) allowing orientation of the axle (2) in order to guide it; and a "retracted shafts" position placing the guide device (16) into the floating state, in which position its two shafts (30, 31) are retracted to the maximum and leave the connecting interface (23) free, allowing lateral displacement.

2. A bidirectional guide system according to claim 1 **characterized in that** it further comprises a pivot plate (7) integral with the axle (2), either fixed or by means of an articulation (8) and on which the two guide devices (16) are attached in opposite directions from each other.

3. A bidirectional guide system according to claim 1 or 2 **characterized in that** the deformable connecting interface (23) comprises a unit of articulated connecting rods.

4. A bidirectional guide system according to the preceding claim **characterized in that** the deformable connecting interface (23) is a unit of connecting rods articulated in a series, the free ends of which are articulated to the axle (2) or to the pivot plate (7) in such a way that the unit of rods forms with the axle or the pivot plate a polygon, a trapezoid or a parallelogram that is deformable in a generally horizontal plane.

5. A bidirectional guide system according to any one of the preceding claims **characterized in that** it further comprises a series of stops (27, 28) limiting lateral displacement.

6. A bidirectional guide system according to any one of the preceding claims **characterized in that** it further comprises a means (48) for absorbing lateral displacement.

7. A bidirectional guide system according to the preceding claim **characterized in that** if lateral displacement occurs, the deformable connecting interface (23) has the capacity, by virtue of its deformation, to drive one of the shafts (30, 31) of the cylinder (29), thus causing it to absorb lateral displacement.

8. A bidirectional guide system according to any one of the preceding claims **characterized in that** the cylinder (29) has a cylindrical body (32) within which two pistons (33, 34) are displaced, each integral with one of the shafts (30, 31) of the cylinder (29) and dividing the interior space of the body into a central chamber (35) and two annular end chambers (36, 37), respectively, located between and on either side of the two pistons (33, 34) and **in that** the pistons (33, 34) are attached to the corresponding shaft (30, 31) of the cylinder (29) such that a portion of the shaft extends beyond either side of the piston, thus defining in each shaft an interior portion (38, 39) located in a central chamber (35) of the cylinder, and an exterior portion (40, 41) extending into the corresponding annular end chamber (36, 37) and beyond it, with the free ends of the interior portions (38., 39) of the two shafts (30, 31) of the cylinder contacting each other when the cylinder is in the "retracted shafts" position.

9. A bidirectional guide system according to claim 8 **characterized in that** the central chamber (35) of the cylinder (29) is supplied with fluid through a supply conduit (46) that remains free and capable of supplying the central chamber no matter what the position of the cylinder is and **in that** it comprises a communication conduit (47) joining the two annular end chambers (36, 37) of the cylinder (29).

10. A bidirectional guide system according to the preceding claim **characterized in that** the communication conduit (47) joining the two annular end chambers (36, 37) comprises at least one constricted portion (48).

11. A bidirectional guide system according to any one of claims 8 through 10 **characterized in that** it comprises springs (51, 52) to elastically recall the pistons (33, 34) toward the center inside the body (32) of the cylinder (29).

12. A bidirectional guide system according to any one of the preceding claims **characterized in that** each guide device (16) comprises at least one sensor (53, 54) to detect when the cylinder (29) is in the "extended shafts" position.

13. A bidirectional guide system according to any one of the preceding claims **characterized in that** it is hydraulic and **in that** its hydraulic circuit comprises a hydraulic group (57) to supply the various elements in the circuit with hydraulic fluid, at least two cylinder blocks (58, 59) and at least one hydraulic spring (60) to restrain the cylinders (29) in the "extended shafts" position.

14. A bidirectional guide system according to the preceding claim **characterized in that** the hydraulic group (57) comprises a buffer reservoir (61), a pump (62) actuated by a motor (63) and two distributors in two positions (69, 70).

15. A bidirectional guide system according to claim 13 **characterized in that** the hydraulic spring (60) comprises a pressure reducer (82) and an accumulator (83), the interior portion of which is divided into two chambers (84, 85) by a membrane (86), one of which (84) is tightly sealed and contains pressurized gas, and the second of which (85) communicates with the hydraulic circuit and serves as a hydraulic fluid reserve.

## Patentansprüche

1. Bidirektionales Führungssystem (1) mit einer Achse (2) für ein auf einer Schiene (6) auf der Erde geführtes Straßenfahrzeug, vor allem ein öffentliches Verkehrsmittel, wobei das Führungssystem außerdem zwei Führungsvorrichtungen (16) aufweist, die mit der Achse (2) verbunden und in entgegengesetzter Richtung auf beiden Seiten von dieser angeordnet sind, mit jeweils einem Führungsarm (17), einfach oder doppelt, der sich zur Führungsschiene (6) hin erstreckt und mindestens eine Führungsrolle trägt (18), die auf der Führungsschiene (6) rollt, wobei jede dieser Führungsvorrichtungen (16) zwei Zustände aufweist, einen starren Zustand, in dem die Achse (2) ausgerichtet werden kann, und einen schwebenden Zustand, der einen seitlichen Ausschlag gestattet, und dient alternativ, je nach Fahrrichtung des Fahrzeugs, vorn als Führungsmodul (55) im starren Zustand oder hinten als Folgemodul (56) im schwebenden Zustand, **gekennzeichnet dadurch, dass** jede Führungsvorrichtung (16) folgendes umfasst:
. eine Verbindungsschnittstelle (23), die zwischen der Achse (2) und dem Führungsarm (17) verformbar ist und durch ihre Verformbarkeit einen seitlichen Ausschlag der Achse (2) im Verhältnis zur Führungsschiene (6) zulässt;
. und ein Zylinder (29) mit zwei Schäften (30, 31), die unabhängig sind und einander gegenüberliegen, mit zwei typischen Positionen: eine Position «Schäfte ausgezogen», in der die Führungsvorrichtung (16) im starren Zustand ist und ihre beiden Schäfte (30, 31) maximal ausgezogen sind und die Verbindungsschnittstelle (23) blockieren, um eine starre Verbindungsschnittstelle zwischen der Achse (2) und dem Führungsarm (17) zu bilden, wodurch es möglich wird, die Achse (2) auszurichten, um ihre Führung zu sichern, und eine Position «Schäfte eingezogen», in der die Führungsvorrichtung (16) im schwebenden Zustand ist und ihre beiden Schäfte (30, 31) maximal eingezogen sind und die verformbare Verbindungsschnittstelle (23) frei lassen, was einen seitlichen Ausschlag gestattet.

2. Bidirektionales Führungssystem nach Anspruch 1, **gekennzeichnet dadurch, dass** es außerdem eine Drehzapfenplatte (7) umfasst, die mit der Achse (2) fest oder mittels eines Gelenks (8) verbunden ist, und auf die in voneinander entgegengesetzter Richtung die beiden Führungsvorrichtungen (16) montiert sind.

3. Bidirektionales Führungssystem nach Anspruch 1 oder 2, **gekennzeichnet dadurch, dass** die verformbare Verbindungsschnittstelle (23) eine Gelenkstangenanordnung umfasst.

4. Bidirektionales Führungssystem nach dem vorherigen Anspruch, **gekennzeichnet dadurch dass** die verformbare Verbindungsschnittstelle (23) eine Anordnung von nacheinander gelenkig verbundenen Pleuelstangen ist, deren freie Enden an der Achse (2) oder an der Drehzapfenplatte (7) gelenkig befestigt sind, so dass die Pleuelstangenanordnung mit ersterer oder letzterer ein Vieleck, ein Trapez oder ein Parallelogramm bildet, das in einer im wesentlichen waagrechten Ebene verformbar ist.

5. Bidirektionales Führungssystem nach einem beliebigen der vorherigen Ansprüche, **gekennzeichnet dadurch, dass** es außerdem eine Reihe von Anschlägen (27, 28) umfasst, die den seitlichen Ausschlag begrenzen.

6. Bidirektionales Führungssystem nach einem beliebigen der vorherigen Ansprüche, **gekennzeichnet dadurch, dass** es außerdem ein Dämpfungsmittel (48) für den seitlichen Ausschlag umfasst.

7. Bidirektionales Führungssystem nach dem vorherigen Anspruch, **gekennzeichnet dadurch, dass** bei seitliche Ausschlag die verformbare Verbindungsschnittstelle (23) durch ihre Verformungsbewegung einen der Schäfte (30, 31) des Zylinders (29) mitnimmt, was eine Dämpfung des seitlichen Ausschlags bewirkt.

8. Bidirektionales Führungssystem nach einem beliebigen der vorherigen Ansprüche, **gekennzeichnet dadurch, dass** der Zylinder (29) einen zylindrischen Körper (32) umfasst, in dem sich zwei Kolben (33, 34) bewegen, die jeweils mit einem der Schäfte (30, 31) des Zylinders (29) verbunden sind, und die das innere Volumen des Körpers (32) in eine zentrale Kammer (35) und zwei ringförmige Endkammern (36, 37) teilen, die zwischen und auf beiden Seiten der beiden Kolben (33, 34) liegen; sowie **dadurch**, dass die Kolben (33, 34) derart auf den entsprechenden Schaft (30, 31) des Zylinders (29) montiert sind, dass ein Teil von letzterem an jeder Seite des Kolbens übersteht, und so für jeden Schaft einen inneren Teil (38, 39) in der zentralen Kammer (35) des Zylinders definiert und einen äußeren Teil (40, 41) in der entsprechenden ringförmigen Endkammer (36, 37) und über letztere hinaus, wobei die freien Enden der inneren Teile (38, 39) der beiden Schäfte (30, 31) des Zylinders in Kontakt sind, wenn der Zylinder sich in der Position «Schäfte eingezogen» befindet.

9. Bidirektionales Führungssystem nach Anspruch 8, **gekennzeichnet dadurch, dass** die zentrale Kammer (35) des Zylinders (29) durch eine Versorgungsleitung (46) mit Fluid versorgt wird, die frei bleibt und die zentrale Kammer versorgt, wie auch immer die Lage des Zylinders ist; und **dadurch**, dass es eine Kommunikationsleitung (47) umfasst, die die beiden ringförmige Endkammern (36, 37) des Zylinders (29) verbindet.

10. Bidirektionales Führungssystem nach dem vorherigen Anspruch, **gekennzeichnet dadurch, dass** die Kommunikationsleitung (47), die die beiden ringförmigen Endkammern (36, 37) verbindet, mindestens eine Drosselung (48) umfasst.

11. Bidirektionales Führungssystem nach einem beliebigen der Patentansprüche 8 bis 10, **gekennzeichnet dadurch, dass** es Federn (51, 52) umfasst, die die Kolben (33, 34) elastisch zur Mitte im Körper (32) des Zylinders (29) zurückbringen.

12. Bidirektionales Führungssystem nach einem beliebigen der vorherigen Ansprüche, **gekennzeichnet dadurch, dass** jede Führungsvorrichtung (16) mindestens einen Aufnehmer (53, 54) umfasst, der die Position «Schäfte ausgezogen» des Zylinders (29) ermittelt.

13. Bidirektionales Führungssystem nach einem beliebigen der vorherigen Ansprüche, **gekennzeichnet dadurch, dass** es hydraulisch ist, sowie **dadurch**, dass sein Hydraulikkreis eine hydraulische Gruppe (57) umfasst, wodurch es möglich wird, die verschiedenen Elemente des Kreises mit hydraulischer Flüssigkeit zu versorgen, mindestens zwei Zylinderblöcke (58, 59) und mindestens eine hydraulische Feder (60), um die Kolben (29) in die Position «Schäfte ausgezogen» zu bringen.

14. Bidirektionales Führungssystem nach dem vorherigen Anspruch, **gekennzeichnet dadurch, dass** die hydraulische Gruppe (57) einen Pufferspeicher (61) umfasst, eine Pumpe (62), betätigt durch einen Motor (63), und zwei Verteiler mit zwei Positionen (69, 70).

15. Bidirektionales Führungssystem nach Anspruch 13, **gekennzeichnet dadurch, dass** die hydraulische Feder (60) einen Druckreduzierer (82) umfasst und einen Akkumulator (83), dessen Innenvolumen durch eine Membran (86) in zwei Kammern (84, 85) unterteilt ist, deren eine (84) abgedichtet ist und ein Gas unter Druck enthält und die zweite (85) in Verbindung mit dem Hydraulikkreis steht und als Reserve für hydraulische Flüssigkeit dient.
